# EUROPÄISCHE PATENTSCHRIFT

(11) **EP 1 127 748 B1**
(45) Veröffentlichungstag und Bekanntmachung des Hinweises auf die Patenterteilung: **03.05.2006**
(21) Anmeldenummer: 01102015.3
(22) Anmeldetag: 30.01.2001
(51) Int. Cl.: B60R 16/02

(54) **Vorrichtung und Verfahren zur Sprachsteuerung**
Device and method for voice control
Dispositif et méthode de la commande par voix

(30) Priorität: 22.02.2000 DE 10008226
(43) Veröffentlichungstag der Anmeldung: 29.08.2001
(73) Patentinhaber: ROBERT BOSCH GMBH, 70442 Stuttgart (DE)
(72) Erfinder: Kynast, Andreas, 31139 Hildesheim (DE)

(56) Entgegenhaltungen:
- EP-A- 0 893 308
- DE-A- 3 712 170
- US-A- 5 276 471
- US-A- 5 621 424
- US-A- 5 883 739
- PATENT ABSTRACTS OF JAPAN vol. 1997, no. 08, 29. August 1997 (1997-08-29) & JP 09 102098 A (HONDA MOTOR CO LTD), 15. April 1997 (1997-04-15)

## Beschreibung

### Stand der Technik

Die Erfindung geht aus von einer Vorrichtung zur Sprachsteuerung eines Geräts bzw. einem Verfahren zur Sprachsteuerung eines Geräts nach der Gattung der unabhängigen Patentansprüche.

Es sind bereits Fahrerassistenzsysteme in Fahrzeugen bekannt, wobei Infotainment (Autoradio, Wiedergabegeräte und Hifi-Anlagen), Kommunikationsmittel (Mobiltelefon, Ortungsvorrichtung und Navigation), Sensoren und Aktoren über eine Sprachsteuerung steuerbar sind. Mittels wenigstens eines Mikrofons werden Spracheingaben eines Nutzers aufgenommen, in elektrische Signale umgewandelt und als Ausführungsbefehl interpretiert. Gegebenenfalls wird über Lautsprecher eine Sprachausgabe vorgenommen, die insbesondere auf die Durchführbarkeit der Ausführungsbefehle Bezug nimmt.

Aus der gattengebildenden EP 0 893 308 A2 ist eine Vorrichtung bekannt, mit einer Fahrzengelektronikeinrichtung ; die z.B. eine Navigationseinrichtung aufweist. Zur Rückmeldung einer Funktion der Elektronikvorrichtung wird in einer Anzeige eine Figur dargestellt, z.B. ein Mensch oder ein Tier oder eine imaginäre Figur, die in verschiedenen Verhaltens- und Ausdrucksweisen eine Rückmeldung verständlich anzeigen soll.

### Vorteile der Erfindung

Die erfindungsgemäße Vorrichtung zur Sprachsteuerung eines Geräts bzw. das erfindungsgemäße Verfahren zur Sprachsteuerung eines Geräts mit den Merkmalen der unabhängigen Patentansprüche haben demgegenüber den Vorteil, dass die sprachliche Kommunikation zwischen dem Gerät, zum Beispiel dem Fahrerassistenzsystem, und dem Nutzer durch verbesserte bildhafte Hinweise in nicht verbaler Art unterstützt wird. Diese verbesserten bildhaften Hinweise, in Form eines symbolhaft dargestellten Gesichts, haben einen hohen Informationsinhalt und einen hohen Wiedererkennungswert, so dass sie zu einer schnellen Erfassung der Information für den Nutzer führen. Damit wird die Kommunikation durch das Gerät, zum Beispiel das Fahrerassitenzsystem, verständlicher und nähert sich insbesondere der rein menschlichen Kommunikation an. Dadurch wächst vorteilhafterweise auch die Akzeptanz für Nutzer, da Nutzer üblicherweise an zwischenmenschliche Kommunikation gewöhnt sind und diese Art der Kommunikation bevorzugen.

Weiterhin ist es von Vorteil, dass insbesondere in einem Fahrzeug oder in einer Fabrikhalle, wenn ein hoher Geräuschpegel vorliegt, die Kommunikation durch die bildhaften Hinweise verständlicher wird, da sprachliche Kommunikation unter dem Hintergrundgeräuschpegel leidet. Dies führt letztlich dann auch zu einer erhöhten Sicherheit des Nutzers, insbesondere des Fahrers, da er wichtige Hinweise zumindest optisch erkennt. Dies gilt auch, falls die Person, die die Sprachsteuerung ausführt, abgelenkt wird. Auch dadurch wächst die Akzeptanz von einer Vorrichtung zur eines Geräts, vorzugsweise eines sprachgesteuerten Fahrerassistenzsystems, da Schwierigkeiten bei solchen sprachgesteuerten Systemen durch die erfindungsgemäßen bildhaften Hinweise kompensiert werden.

Durch die in den abhängigen Ansprüchen aufgeführten Maßnahmen und Weiterbildungen sind vorteilhafte Verbesserungen der in den unabhängigen Patentansprüchen angegebenen Vorrichtung zur Sprachsteuerung eines Geräts bzw. des Verfahrens zur Sprachsteuerung eines Geräts möglich.

Besonders vorteilhaft ist, dass die bildhaften Hinweise zweidimensional dargestellt werden, wodurch eine deutliche, unmißverständliche und klare Aussage getroffen wird. Weiterhin ist eine zweidimensionale Darstellung leicht für einen Benutzer erfassbar und führt zu einem eindeutigen Hinweis.

Des weiteren ist es von Vorteil, dass dreidimensional dargestellte bildhafte Hinweise eine lebensnahe Darstellung liefern, die zu einer großen Akzeptanz bei Benutzern führt. Ein Benutzer wird eine Mensch-zu-Mensch-Kommunikation immer gegenüber einer Mensch-Maschine-Kommunikation bevorzugen.

Darüber hinaus ist es von Vorteil, dass die bildhaften Hinweise mit bewegten Darstellungen angezeigt werden, was die Lebensechtheit der bildhaften Hinweise weiter steigert, da dadurch beispielsweise ein künstliches Gesicht dargestellt wird, das Sprachausgaben durch Mienenspiel unterstützt.

Es ist weiterhin von Vorteil, dass die bildhaften Hinweise durch künstliche Mimik und/oder Gestik dargestellt werden, so dass die Lebensechtheit und damit die Akzeptanz bei den Nutzern von sprachgesteuerten Geräten stark erhöht wird.

Es ist von Vorteil, dass durch Netzhautprojektoren oder stereoskopische Bildschirme als Anzeigen dreidimensionale bildhafte Hinweise erzeugt werden, so dass dadurch in einfacher Weise dreidimensionale künstliche bildhafte Hinweise erzeugt werden, die eine hohe Akzeptanz bei Benutzern finden und eine klare Aussage für den Benutzer bedeuten.

Schließlich ist es von Vorteil, dass die erfindungsgemäße Vorrichtung beziehungsweise das erfindungsgemäße Verfahren in einem Fahrzeug verwendet werden, wo damit die Sprachsteuerung besonders in seiner Akzeptanz durch einen lebensnäheren Dialog und eine erhöhte Sicherheit des Fahrers gesteigert wird.

### Zeichnung

Ausführungsbeispiele der Erfindung sind in der Zeichnung dargestellt und werden in der nachfolgenden Beschreibung näher erläutert. Es zeigen Figur 1 die erfindungsgemäße Vorrichtung zur Sprachsteuerung eines Geräts, Figur 2 die erfindungsgemäße Vorrichtung zur Sprachsteuerung eines Geräts, wobei die Komponenten der Vorrichtung und mit der Vorrichtung verbundene Komponenten über einen Bus verbunden sind, Figur 3 Beispiele für bildhafte Hinweise, Figur 4 eine beispielhafte Szene und Figur 5 ein Flußdiagramm des erfindungsgemäßen Verfahrens.

### Beschreibung

Die Mensch-zu-Mensch-Kommunikation zeigt einen hohen Anteil an nonverbaler Kommunikation, die die sprachliche Kommunikation unterstützt. Gestik, Mimik und Bewegungen geben allein schon ohne die sprachliche Kommunikation einen wesentlichen Anteil der ausgesendeten Information wieder, so dass fast auf die sprachliche Kommunikation verzichtet werden kann. Mensch-Maschine-Dialoge sind jedoch, wenn Sprachsteuerung vorliegt, allein durch eine Spracheingabe und Sprachausgabe charakterisiert. Ein hoher Hintergrundgeräuschpegel erschwert diese rein sprachliche Mensch-Maschine-Kommunikation.

Erfindungsgemäß wird daher der Mensch-Maschine-Dialog bei einer Sprachsteuerung in einem Fahrzeug durch bildhafte Hinweise, also eine optische Komponente, unterstützt. Damit ist es möglich, dass selbst, wenn die Sprachausgabe aufgrund von Lärm oder Ablenkung von dem Nutzer nicht aufgenommen wurde, durch Blickkontakt mit der Anzeige eine Informationsaufnahme möglich ist. In Weiterbildungen der Erfindung werden die bildhaften Hinweise entweder zweidimensional oder dreidimensional dargestellt, wobei dies gegebenenfalls durch bewegte Darstellungen unterstützt wird, so dass die Lebensechtheit der bildhaften Hinweise gesteigert wird. Vorteilhafterweise wird dazu ein künstliches Gesicht gewählt, das durch künstliche Mimik und Gestik besonders ausdrucksstark Sprachausgaben der erfindungsgemäßen Vorrichtung zur Sprachsteuerung eines Geräts bildhaft wiedergibt und unterstützt.

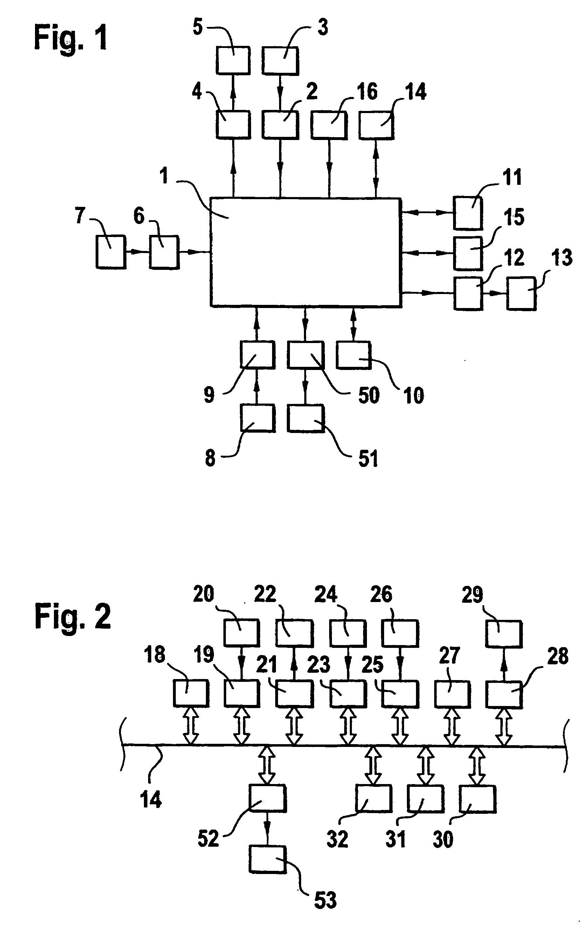

In Figur 1 ist die erfindungsgemäße Vorrichtung zur Sprachsteuerung eines Geräts in einem Fahrzeug dargestellt. Die Vorrichtung und die mit der Vorrichtung verbundenen Komponenten machen hier ein Fahrerassisstenzsystem als das mittels Sprachsteuerung zu steuernde Gerät in dem Fahrzeug aus.

Ein Prozessor 1 ist über seinen ersten Dateneingang mit einer Signalverarbeitung 2 verbunden, und an einen Dateneingang der Signalverarbeitung 2 ist ein Mikrofon 3 angeschlossen. Hier ist nur ein Mikrofon angeschlossen. Es sind jedoch mehrere Mikrofone anschließbar, wobei dann die Signalverarbeitung 2 auch als Demultiplexer wirkt. Über einen ersten Datenausgang ist der Prozessor 1 mit einer Signalverarbeitung 4 angeschlossen. Über einen Datenausgang der Signalverarbeitung 4 ist ein Lautsprecher 5 angeschlossen. Alternativ können hier auch mehrere Lautsprecher angeschlossen sein, wobei dann die Signalverarbeitung 4 auch als Multiplexer wirkt. In einer weiteren Alternative kann das Lautsprechersystem eines Infotainmentsystems 11, das über einen ersten Datenein-/ausgang mit dem Prozessor 1 verbunden ist, verwendet werden.

Über einen zweiten Dateneingang ist der Prozessor 1 mit einer Signalverarbeitung 6 verbunden. An einen Dateneingang der Signalverarbeitung 6 sind Bedienelemente 7 angeschlossen. Die Bedienelemente 7 repräsentieren hier haptische Bedienelemente, die der Fahrer in dem Fahrzeug oder auch Beifahrer bedienen können. Über einen dritten Dateneingang ist der Prozessor 1 mit einer Signalverarbeitung 9 verbunden. An einen Dateneingang der Signalverarbeitung 9 sind Sensoren 8 angeschlossen. Über einen zweiten Datenein-/-ausgang des Prozessors 1 ist ein Speicher 10 mit dem Prozessor 1 verbunden. Über einen zweiten Datenausgang ist der Prozessor 1 mit einer Signalverarbeitung 12 verbunden und an deren Datenausgang sind Aktoren 13 angeschlossen. Über einen dritten Datenein/-ausgang ist der Prozessor 1 mit einem Navigationssystem 15 verbunden. Über einen fünften Datenein-/-ausgang ist ein Kommunikationssystem 14 an den Prozessor 1 angeschlossen. Über einen vierten Dateneingang ist an den Prozessor 1 eine Ortungsvorrichtung 16 angeschlossen. Ein fünfter Datenausgang des Prozessors 1 führt zu einer Signalverarbeitung 50, die Signale an eine Anzeige 51 ausgibt.

Spracheingaben werden mittels des Mikrofons 3 und angeschlossener Elektronik von akustischen Signalen in elektrische Signale umgewandelt, um dann von der Signalverarbeitung 2 digitalisiert zu werden und schließlich an den Prozessor 1 übertragen zu werden. Weiterhin verfügt die Signalverarbeitung 2 über einen Sprachprozessor, der die Sprachsignale in für den Prozessor 1 geeignete Daten umwandelt. Es wird dabei insbesondere eine Quellencodierung der Sprachsignale in ein dem Prozessor 1 bekanntem Format durchgeführt.

Der Prozessor 1 wertet die Spracheingabe aus und vergleicht dieses Signal mit im Speicher 10 abgelegten Signalen, um herauszufinden, um welchen Eingabebefehl es sich handelt. Dabei ist zu berücksichtigen, dass ein sprachgesteuertes System zunächst aktiviert werden muß, um nicht zufällig Befehle durch Gespräche im Fahrraum zu empfangen. Diese Aktivierung geschieht beispielsweise mittels eines haptischen Bedienelements, das am Lenkrad des Fahrzeugs befestigt ist, z.B. durch einen Druckknopf, der analog zu einer Drucktaste für eine Hupe angebracht ist.

Dieser Druckknopf gehört dann zu den Bedienelementen 7, wobei die Bedienelemente 7 eine haptische Bewegung, die an ihnen durchgeführt wird, in ein elektrisches Signal mittels angeschlossener Elektronik umwandeln und verstärken, um es an die Signalverarbeitung 6 zu übergeben, die dieses Signal auswertet und digitalisiert, um es dann an den Prozessor 1 zu übergeben, so dass im Falle der Aktivierung der Sprachsteuerung durch die Bedienelemente 7 der Prozessor 1 nun Signale von der Signalverarbeitung 2 als Spracheingabebefehl akzeptiert. Die digitalen Signale, die aufgrund haptischer Eingaben an den Bedienelementen 7 erzeugt werden, weisen eine feste Codierung, beispielsweise eindeutige Bitfolgen auf, die die haptischen Eingaben eindeutig identifizieren.

Findet nun der Prozessor 1 in dem Speicher 10 einen übereinstimmenden Befehl mit dem Spracheingabebefehl, dann erkennt der Prozessor 1, welchen Ausführungsbefehl er durchzuführen hat. Dazu überprüft nun der Prozessor 1, ob dieser Befehl ausführbar ist. Sind z.B. entsprechende Komponenten, die zur Ausführung dieses Ausführungsbefehls notwendig sind, bereit, dann wird dieser Ausführungsbefehl durchgeführt. Ist der Ausführungsbefehl jedoch nicht durchführbar, dann übergibt der Prozessor 1 eine entsprechende Meldung über die Signalverarbeitung 4 an den Lautsprecher 5, um akustisch anzuzeigen, dass dieser Befehl nicht ausführbar ist, insbesondere unter dem Hinweis, welchen Grund die Nichtausführbarkeit hat, z.B. wenn die Handbremse noch gezogen ist. Diese Antworten entnimmt der Prozessor 1 aus dem Speicher 10.

Dabei sind die Antworten mit den erkannten Ausführungsbefehlen bei Ausführbarkeit oder Nichtausführbarkeit verknüpft, wobei bei Nichtausführbarkeit mehrere Antworten möglich sind, die nach weiteren technischen Merkmalen verknüpft sind, die einen entsprechenden Hinweis aufweisen, um den Mangel zu beheben. Ist z.B. die Handbremse gezogen, so wird dies mittels der Sensoren 8 erkannt und dem Prozessor 1 über die Signalverarbeitung 9 übermittelt.

Die Sensoren 8 repräsentieren hier verschiedene Sensoren, Öl, Wasser, Reifendruck, Motorfunktionsfähigkeit, Funktionsfähigkeit der elektrischen Komponenten und eben auch, ob die Handbremse gezogen ist. Mit diesen Merkmalen wählt der Prozessor 1 aus dem Speicher 10 entsprechende Antworten aus. Zusätzlich zu der Sprachausgabe, dass ein Befehl ausführbar oder nicht ausführbar ist, lädt der Prozessor 1 aus dem Speicher 10 bildhafte Hinweise, die über die Signalverarbeitung 50 mittels der Anzeige 51 dargestellt werden. Jedoch auch bei erfolgreicher Ausführung wird eine sprachliche Ausgabe mit einem bildhaften Hinweis unterstützt, wobei hier gegebenenfalls auf eine Sprachausgabe verzichtet werden kann.

Beispiele für solche bildhaften Darstellungen werden weiter unten näher beschrieben. Es kann sich dabei um zweidimensionale, dreidimensionale und animierte Darstellungen handeln. Für eine dreidimensionale Darstellung ist entweder ein Netzhautprojektor oder ein stereoskopischer Bildschirm als die Anzeige 51 notwendig. Eine dreidimensionale Darstellung erhöht den Wirklichkeitseffekt der Darstellung, insbesondere, wenn es sich um ein künstliches Gesicht handelt, dass durch entsprechende Gestik und Mimik die Sprachausgabe unterstützt.

Ist der Ausführungsbefehl, den der Prozessor 1 entweder mittels des Mikrofons 3 oder der Bedienelemente 7 erhalten hat, ausführbar, dann wird mittels der Aktoren 13, die die Signale von dem Prozessor 1 über die Signalverarbeitung 12, die die Signale für die Aktoren 13 vorbereitet, erhalten, der Ausführungsbefehl in eine Aktion umgesetzt. Die Aktoren 13 sind für mechanische Bewegungen von Teilen angebracht, die elektronisch gesteuert werden. Dazu gehört eine Türverriegelung, Scheibenwischer, eine Sitzverstellung, Fensterheber, eine Frischluft- und Temperaturzufuhr und eine Klimaanlage. Betrifft der Ausführungsbefehl nicht die Aktoren 13, sondern ein Navigationsgerät 15, insbesondere um Routenvorschläge zu erzeugen, dann überträgt der Prozessor 1 dem Navigationsgerät 15 entsprechende Daten.

Das Navigationsgerät 15 wird gegebenenfalls weitere Daten von dem Benutzer erfragen und sich dabei des Lautsprechers 5 und/oder der Anzeige 51 bedienen. Das Navigationsgerät 15 verfügt selbst über Speicher, um entsprechende Routen zu ermitteln. Den aktuellen Standort gibt die Ortungsvorrichtung 16 an, wobei die Ortungsvorrichtung 16 hier ein GPS (Global Positioning System) Empfänger ist, der die Ortskoordinaten des Fahrzeugs ermittelt. Damit ist das Navigationsgerät 15 in der Lage, aus dem aktuellen Standort und seinem Speicher eine optimale Route unter verschiedenen Gesichtspunkten zu ermitteln. Zu solchen Gesichtspunkten gehören Fahrerpräferenzen und auch Verkehrsnachrichten, die mittels des Infotainmentsystems 11 und/oder des Kommunikationssystems 14 ermittelt werden.

Die Verkehrsnachrichten werden beim Infotainmentsystem 11 mittels eines Autoradios, das zum Infotainmentsystem 11 gehört, ermittelt und dann an den Prozessor 1 übertragen. Der Prozessor 1 überträgt diese entsprechende Nachricht an das Navigationssystem 15, das mittels der Nachricht Routenvorschläge modifiziert. Das Kommunikationssystem 14 ist hier ein Mobiltelefon, also eine Sende-/Empfangsstation, mit der entweder Telefonie ausgeführt wird oder Daten abgerufen werden.

Zu dem Infotainmentsystem 11 gehört neben dem Autoradio, das auch als digitaler Rundfunkempfänger ausgebildet sein kann, Wiedergabegeräte für Speichermedien, die insbesondere Musik, enthalten. Zu solchen Wiedergabegeräten gehören Kassetten, Abspieler, Minidiscspieler, CD-Spieler oder ein MPEG3-Player. Ist der Rundfunkempfänger des Infotainmentsystems 11 als digitaler Rundfunkempfänger ausgebildet, insbesondere für den Empfang von DAB (Digital Audio Broadcasting), dann ist der digitale Rundfunkempfänger auch als Breitbandempfänger von Daten geeignet.

DAB ist ein digitales Übertragungsverfahren, das neben der digitalen Übertragung von Audiodaten auch zur Übertragung von Multimediadaten geeignet ist. In diesen Multimediadaten können, wie oben dargestellt, Verkehrsnachrichten enthalten sein, aber auch andere Daten, die zur Unterhaltung oder Information des Fahrers und der Beifahrer dienen. Neben DAB sind auch DRM (Digital Radio Mondial) und DVB (Digital Video Broadcasting) für den Empfang von digitalen Hörfunkprogrammen und Multimediadaten geeignet. Sie unterscheiden sich von DAB hinsichtlich der Sendefrequenzen, der Rahmenstruktur und der Übertragungsrate. Diese digitalen Übertragungsverfahren bieten gegenüber Mobilfunkverfahren mehr Bandbreite, es fallen keine Übertragungsgebühren an, und es muß keine Verbinung zu dem jeweiligen Rundfunkempfänger aufgebaut werden, da diese Übertragungsverfahren Rundfunkverteilsysteme sind.

Der Speicher 10, der insbesondere zur Zwischenspeicherung von Daten und zum Abruf von gespeicherten Daten genutzt wird, repräsentiert hier ein System, das mehrere Speichermedien aufweist. Dazu gehören eine Festplatte als wiederbesschreibbarer Speicher und auch feste Speicher wie CD-ROMs.

In Figur 2 ist die erfindungsgemäße Vorrichtung zur Sprachsteuerung in einem Fahrzeug dargestellt, wobei die einzelnen Komponenten nun über einen Bus 17 miteinander verbunden sind. Der Bus 17 ist hier als elektrisches Leitungssystem ausgebildet. Alternativ ist es jedoch auch möglich, den Bus 17 als optisches Übertragungssystem oder als funkbasierten Bus auszuführen.

Die an den Bus 17 angeschlossenen Stationen weisen Buscontroller auf, die die Kommunikation über den Bus 17 steuern. Liegt ein optischer Bus vor, dann sind diese Buscontroller mit Optokopplern versehen. Liegt ein funkbasierter Bus vor, dann sind die Buscontroller mit Sende-/Empfangsstationen ausgeführt.

An den Bus 17 sind über Datenein-/-ausgänge ein Prozessor 18, die Signalverarbeitungen 19, 21, 23, 25, 28 und 52 angeschlossen, sowie ein Speicher 27, ein Kommunikationssystem 30, ein Infotainmentsystem 31 und ein Navigatiossystem 32. An einen Dateneingang der Signalverarbeitung 19 ist ein Mikrofon 20 angeschlossen. An einen Datenausgang der Signalverarbeitung 21 ist ein Lautsprecher 22 angeschlossen. Über einen Dateneingang der Signalverarbeitung 23 sind Bedienelemente 24 angeschlossen. mit einem Dateneingang der Signalverarbeitung 25 sind Sensoren 26 angeschlossen. Über einen Datenausgang der Signalverarbeitung 28 sind Aktoren 29 mit der Signalverarbeitung 28 verbunden. An einen Datenausgang der Signalverarbeitung 52 ist eine Anzeige 53 angeschlossen.

Die Funktionen und Alternativen sind dieselben wie für die Komponenten, die in Figur 1 beschrieben wurden.

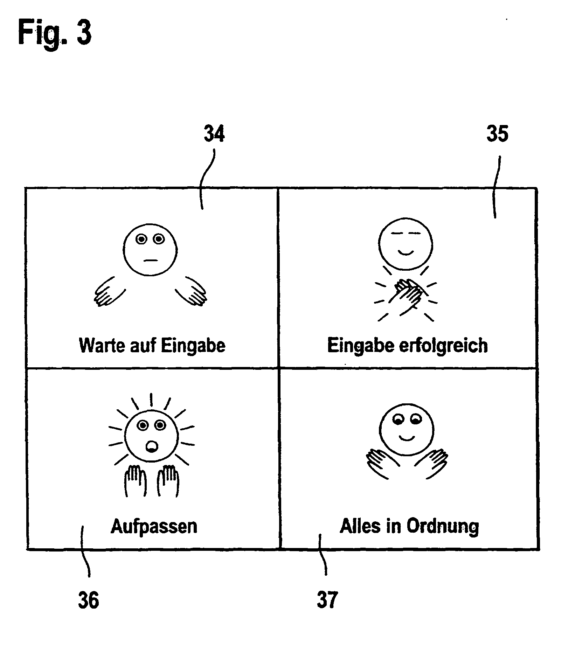

In Figur 3 ist ein Satz von bildhaften Hinweisen dargestellt, der in einem Fahrzeug zur Unterstützung von Sprachausgabe ausgegeben wird. Der bildhafte Hinweis 34 zeigt durch Gestik und symbolhafte Hände ein Warten auf eine Eingabe an.

Der bildhafte Hinweis 35 zeigt durch Gestik, Mimik und ein angedeutetes Klatschen durch die symbolhaften Hände die Reaktion auf eine erfolgreiche Eingabe an.

Der bildhafte Hinweis 36 zeigt durch Gestik und Mimik des symbolhaften Gesichts und die erhobenen symbolhaften Hände eine Warnung für den Fahrer an.

Schließlich deutet der bildhafte Hinweis 37 durch Gestik und Mimik des symbolhaften Gesichtes und gefaltete symbolhafte Hände an, dass alles in Ordnung ist. Wichtig für die Auswahl der symbolhaften Darstellungen ist, dass es nicht zu viele verschiedene bildhaften Hinweise sind, um einen Fahrer nicht durch zu viele Abstufungen in seiner Aufnahmekapazität zu überfordern, und dass sie leicht und deutlich erkennbar sind. Durch Bewegung der symbolhaften Hände oder des symbolhaften Gesichtes, insbesondere durch ein lebensechteres Gesicht, das das Mienenspiel und die verschiedenen Gestiken noch weiter unterstützt, sind Alternativen möglich. Durch Verwendung eines Netzhautprojektors oder eines stereoskopischen Bildschirms für die Anzeige 51 können die in Figur 3 dargestellten bildhaften Hinweise auch perspektivisch dargestellt werden, um so eine größere Lebensechtheit zu vermitteln.

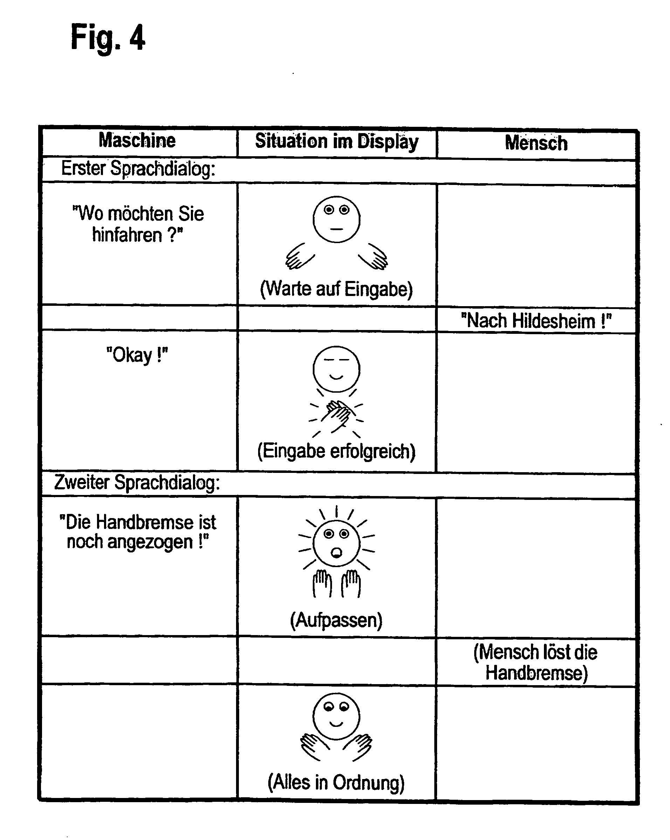

In Figur 4 ist eine beispielhafte Szene in einem Fahrzeug schematisch dargestellt. In der linken Spalte sind die Sprachausgaben der erfindungsgemäße Vorrichtung dargestellt, in der Mitte die entsprechenden bildhaften Hinweise, um die Sprachausgaben der erfindungsgemäßen Vorrichtung zu unterstützen und in der linken Spalte sind Spracheingaben des Fahrers angegeben. In der ersten Zeile fragt die Vorrichtung, wohin der Fahrer fahren möchte. Dies wird in der zweiten Spalte durch den bildhaften Hinweis 34 unterstützt, um eine Eingabe anzuregen. Der Fahrer gibt den Fahrwunsch nach Hildesheim sprachlich an.

Die Vorrichtung erkennt in der zweiten Zeile dieses Ziel als möglich und unterstützt dies durch den bildhaften Hinweis 35, da die Eingabe erfolgreich war. In Zeile 3 gibt die Maschine an, dass die Handbremse noch angezogen ist und unterstützt dies durch den bildhaften Hinweis 36, der eine sofortige Reaktion des Fahrers erwartet. Der Fahrer löst dann mittels der Bedienelemente 7 die Handbremse, und die Vorrichtung gibt dann in der letzten Zeile mit dem bildhaften Hinweis 37 an, dass nun alles in Ordnung ist. Dies kann gegebenenfalls noch durch eine Sprachausgabe unterstützt werden. Warnung können noch durch weitere optische Meldungen oder Warntöne zusätzlich signalisiert werden.

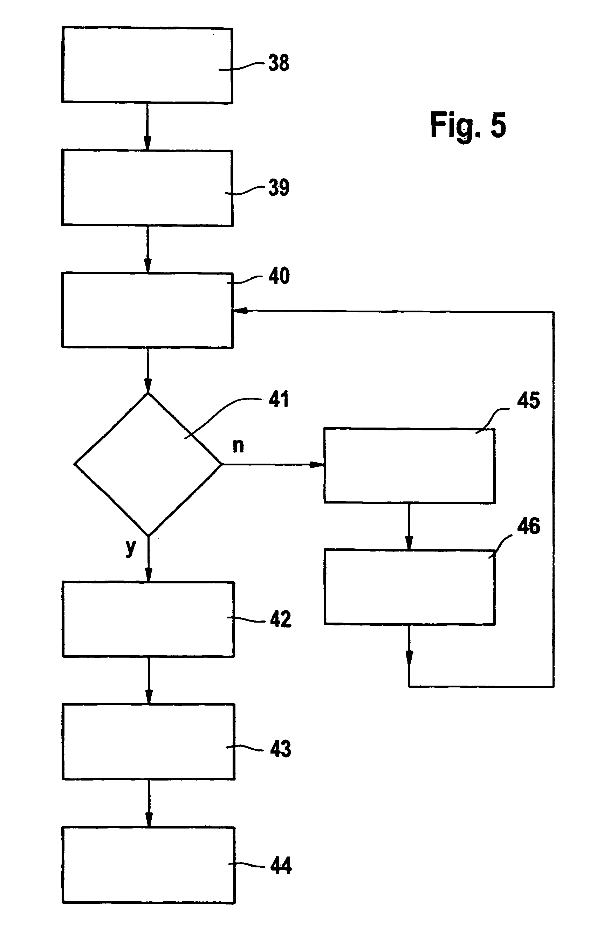

In Figur 5 ist das erfindungsgemäße Verfahren zur Sprachsteuerung in einem Fahrzeug als Flußdiagramm dargestellt. In Verfahrensschritt 38 gibt die Sprachsteuerung des Fahrzeugs an, dass sie eine Eingabe erwartet, z.B. bezüglich des Fahrziels, um mittels des Navigationsgeräts 15 eine Route zu errechnen. In Verfahrensschritt 39 wird dies durch den bildhaften Hinweis 34 unterstützt. In Verfahrensschritt 40 führt der Fahrer eine Sprach- und/oder haptische Eingabe durch, die in Verfahrensschritt 41 auf ihre Ausführbarkeit hin überprüft wird. Ist die Eingabe des Fahrers ausführbar, dann wird in Verfahrensschritt 42 dies in einer Sprachausgabe mitgeteilt und in Verfahrensschritt 43 mittels des bildhaften Hinweises 35 unterstützt. In Verfahrensschritt 44 wird dann mittels des bildhaften Hinweises 37 angezeigt, dass alles in Ordnung ist. Wurde jedoch in Verfahrensschritt 43 erkannt, dass die Ausführbarkeit des Befehls des Fahrers nicht gegeben ist, dann wird in Verfahrensschritt 45 mittels einer Sprachausgabe angegeben, dass dies nicht möglich ist und in Verfahrensschritt 46 wird dies mittels des bildhaften Hinweises 36 unterstützt, um dann nach Verfahrensschritt 40 zurückzuspringen, um auf eine neue Eingabe zu warten.

Neben Anwendungen in einem Fahrzeug ist die erfindungsgemäße Vorrichtung beziehungsweise das erfindungsgemäße Verfahren auch für eine Sprachsteuerung von anderen Geräten wie zum Beispiel in Produktionseinheiten und Überwachungsanlagen verwendbar. Auch der Einsatz in intelligenten zentralen Kommunikations- und Steueranlagen ist hier denkbar.

## Patentansprüche

1. Vorrichtung zur Sprachsteuerung eines Geräts, wobei die Vorrichtung wenigstens ein Mikrofon (3, 20) für Spracheingaben und wenigstens einen Lautsprecher (5, 22) für Sprachausgaben aufweist, wobei die Vorrichtung mit einem Prozessor (1, 18), mit Bedienelementen (7, 24), mit Sensoren (8, 26), mit wenigstens einem Speicher (10, 27) und mit einer Anzeige (51, 53) des Geräts verbunden ist, wobei der Prozessor (1, 18) so ausgebildet ist, dass der Prozessor (1, 18) in Abhängigkeit von Sprachausgaben bildhafte Hinweise mittels eines künstlich dargestellten Gesichts auf der Anzeige (51, 53) darstellt, das durch künstliche Mimik und Gestik Sprachausgaben der Vorrichtung zur Sprachsteuerung eines Geräts wiedergibt und unterstützt, **dadurch gekennzeichnet, dass**, das Gesieht symbolhaft dargestellt ist.

2. Vorrichtung nach Anspruch 1, **dadurch gekennzeichnet, dass** die Anzeige (51, 53) so ausgebildet ist, dass die Anzeige (51, 53) die bildhaften Hinweise als zweidimensionale Darstellungen anzeigt.

3. Vorrichtung nach Anspruch 1 oder 2, **dadurch gekennzeichnet, dass** die Anzeige (51, 53) derart ausgebildet ist, dass die Anzeige (51, 53) die bildhaften Hinweise dreidimensional darstellt.

4. Vorrichtung nach Anspruch 2 oder 3, **dadurch gekennzeichnet, dass** die Anzeige (51, 53) derart ausgebildet ist, dass die Anzeige (51, 53) die bildhaften Hinweise (34 bis 37) mit bewegten Darstellungen anzeigt.

5. Vorrichtung nach einem der vorhergehenden Ansprüche, **dadurch gekennzeichnet, dass** die Anzeige (51, 53) als Netzhautprojektor ausgebildet ist.

6. Vorrichtung nach einem der Ansprüche 1 bis 4, **dadurch gekennzeichnet, dass** die Anzeige (51, 53) als stereoskopischer Bildschirm ausgebildet ist.

7. Verwendung einer Vorrichtung nach einem der vorhergehenden Ansprüche in einem Fahrzeug.

8. Verfahren zur Sprachsteuerung eines Geräts, wobei Spracheingaben zur Steuerung des Geräts durchgeführt werden, wobei die Spracheingaben in Ausführungsbefehle umgesetzt werden, wobei die Ausführungsbefehle auf eine Ausführbarkeit hin überprüft werden, wobei Sprachausgaben in Abhängigkeit von der Ausführbarkeit und/oder eines Zustands des Geräts ausgeführt werden, wobei in Abhängigkeit von dem Zustand des Geräts und/oder der Ausführbarkeit der Ausführungsbefehle bildhafte Hinweise mittels einer künstlichi, dargestellten Gesichts auf der Anzeige (51, 53) angezeigt werden, das durch künstliche Mimik und Gestik Sprachausgaben der Vorrichtung zur Sprachsteuerung eines Geräts wiedergibt und unterstützt, **dadurch gekennzeichnet, dass** das Gesicht symbolhaft dargestellt wird.

9. Verfahren nach Anspruch 8, **dadurch gekennzeichnet, dass** die bildhaften Hinweise (34 bis 37) zweidimensional dargestellt werden.

## Claims

1. Apparatus for voice control for an appliance, where the apparatus has at least one microphone (3, 20) for voice inputs and at least one loudspeaker (5, 22) for voice outputs, where the apparatus is connected to a processor (1, 18), to operator control elements (7, 24), to sensors (8, 26), to at least one memory (10, 27) and to a display (51, 53) of the appliance, the processor (1, 18) being designed such that the processor (1, 18) takes voice outputs as a basis for showing graphical indications using an artificially shown face on the display (51, 53) which reproduces and supports voice outputs from the apparatus for voice control for an appliance using artificial gestures and expressions, **characterized in that** the face is shown symbolically.

2. Apparatus according to Claim 1, **characterized in that** the display (51, 53) is designed such that the display (51, 53) displays the graphical indications as two-dimensional representations.

3. Apparatus according to Claim 1 or 2, **characterized in that** the display (51, 53) is designed such that the display (51, 53) shows the graphical indications in three dimensions.

4. Apparatus according to Claim 2 or 3, **characterized in that** the display (51, 53) is designed such that the display (51, 53) displays the graphical indications (34 to 37) using moving representations.

5. Apparatus according to one of the preceding claims, **characterized in that** the display (51, 53) is in the form of a retinal projector.

6. Apparatus according to one of Claims 1 to 4, **characterized in that** the display (51, 53) is in the form of a stereoscopic screen.

7. Use of an apparatus according to one of the preceding claims in a vehicle.

8. Method for voice control for an appliance, where voice inputs for controlling the appliance are made, where the voice inputs are converted into executive instructions, where the executive instructions are checked for executability, where voice outputs are executed on the basis of the executability and/or a state of the appliance, where the state of the appliance and/or the executability of the execution commands is/are taken as a basis for displaying graphical indications using an artificially shown face on the display (51, 53) which reproduces and supports voice outputs from the apparatus for voice control for an appliance using artificial gestures and expressions, **characterized in that** the face is shown symbolically.

9. Method according to Claim 8, **characterized in that** the graphical indications (34 to 37) are shown in two dimensions.

## Revendications

1. Dispositif de commande vocale d'un appareil, présentant au moins un microphone (3, 20) pour les entrées vocales et au moins un haut-parleur (5, 22) pour les émissions vocales, le dispositif étant relié à un processeur (1, 18), à des éléments de commande (7, 24), à des capteurs (8, 26), à au moins une mémoire (10, 27) et à un dispositif d'affichage (51, 53) de l'appareil, le processeur (1, 18) étant conçu de telle sorte qu'en fonction d'émissions vocales, il affiche sur le dispositif d'affichage (51, 53) des indications imagées au moyen d'un visage représenté artificiellement, le visage restituant et soutenant par des mimiques et des gestes artificiels des émissions vocales du dispositif de commande vocale d'un appareil,
**caractérisé en ce que**
le visage est représenté de manière symbolique.

2. Dispositif selon la revendication 1,
**caractérisé en ce que**
le dispositif d'affichage (51, 53) affiche les indications imagées sous forme de représentations bidimensionnelles.

3. Dispositif selon la revendication 1 ou 2,
**caractérisé en ce que**
le dispositif d'affichage (51, 53) est configuré de telle sorte qu'il affiche les indications imagées sous forme tridimensionnelle.

4. Dispositif selon la revendication 2 ou 3,
**caractérisé en ce que**
le dispositif d'affichage (51, 53) est configuré de telle sorte qu'il affiche les indications imagées (34 à 37) avec des représentations mobiles.

5. Dispositif selon l'une des revendications précédentes,
**caractérisé en ce que**
le dispositif d'affichage (51, 53) est configuré sous forme de projecteur rétinien.

6. Dispositif selon l'une des revendications 1 à 4,
**caractérisé en ce que**
le dispositif d'affichage (51, 53) est configuré sous forme d'écran stéréoscopique.

7. Utilisation d'un dispositif selon l'une des revendications précédentes dans un véhicule.

8. Procédé de commande vocale d'un appareil, des entrées vocales devant être réalisées pour la commande de l'appareil, les entrées vocales étant converties en ordres d'exécution, les ordres d'exécution étant contrôlés vis-à-vis de leur faisabilité, des émissions vocales étant réalisées en fonction de la faisabilité et/ou d'un état de l'appareil, des indications imagées étant affichées sur le dispositif d'affichage (5) au moyen d'un visage représenté artificiellement, en fonction de l'état de l'appareil et/ou de la faisabilité des ordres d'exécution, le visage reproduisant et soutenant par des mimiques et des gestes artificiels des émissions vocales du dispositif de commande vocale d'un appareil,
**caractérisé en ce que**
le visage est représenté de manière symbolique.

9. Procédé selon la revendication 8,
**caractérisé en ce que**
les indications imagées (34 à 37) sont affichées sous forme bidimensionnelle.
